# EUROPÄISCHE PATENTANMELDUNG

(11) **EP 4 410 450 A1**
(43) Veröffentlichungstag der Anmeldung: **07.08.2024**
(21) Anmeldenummer: 23154846.2
(22) Anmeldetag: 03.02.2023
(51) Int. Cl.: B22D 11/16

(54) **VERFAHREN ZUR HERSTELLUNG VON PRODUKTEN BESTIMMTER STAHLSORTEN MIT EINER VORGEGEBENEN OBERFLÄCHENQUALITÄT IN EINER STRANGGUSSANLAGE UMFASSEND EINE OBERFLÄCHENINSPEKTION**

(71) Anmelder: SMS Group GmbH, 40237 Düsseldorf (DE)
(72) Erfinder: Murthy, Rashmi, 40547 Düsseldorf (DE); Torillo, Adrian Javier Jaime, 33175 Bad Lippspringe (DE); Pander, Michael, 50739 Köln (DE)
(74) Vertreter: Klüppel, Walter

(57) **Zusammenfassung**

Die Erfindung betrifft ein Verfahren (100) "Prime Optimizer" zur Herstellung von Produkten wie Dickbrammen, Dünnbrammen oder Langprodukten einer bestimmten Stahlsorte mit einer vorgegebenen Oberflächenqualität in einer Stranggussanlage (1) umfassend wenigstens die Anlagenteile Stahlwerk (2), Pfannenofen (3), Gießmaschine (4), Walzwerk (5) und Oberflächeninspektion (6), basierend auf den Schritten:
- Vorhersage (102) von Oberflächendefekten mittels wenigstens eines Vorhersagemodells (13) für Oberflächendefekte auf Basis der historischen relevanten Regelgrößen und der historischen Oberflächendefekte und deren jeweiligen Positionen am hergestellten Produkt;
- Auswerten (103) der Vorhersage des Vorhersagemodells (13) mittels eines Auswertemodells (14) zur Bestimmung von Fehlerursachen der vom Vorhersagemodell (13) vorhergesagten Oberflächendefekte, wobei die Fehlerursachen jeweils wenigstens eine Regelgröße der Anlagenteile; und
- Bestimmen (104) angepasster Regelgrößen mittels eines Expertensystems (15) zur Vermeidung der vorhergesagten Oberflächendefekte, um die vorgegebene Oberflächenqualität zu erreichen, wobei das Expertensystem (15) die Regelgrößen anpasst, die vom Auswertemodell (14) als Fehlerursache bestimmt wurden.

## Beschreibung

Die Erfindung betrifft ein Verfahren zur Herstellung von Produkten wie Dickbrammen, Dünnbrammen oder Langprodukten bestimmter Stahlsorten mit einer vorgegebenen Oberflächenqualität in einer Stranggussanlage umfassend wenigstens die Anlagenteile Stahlwerk, Pfannenofen, Gießmaschine, Walzwerk und Oberflächeninspektion.

Die Herstellung der genannten Produkte in der Stranggussanlage erfolgt in den aufeinanderfolgenden Anlagenteilen Stahlwerk, Pfannenofen, Gießmaschine und Walzwerk. Ferner können noch zusätzliche Anlagenteile in dieser Prozesskette enthalten sein, wie beispielsweise Beizanlagen oder dergleichen. Die Herstellung der Produkte erfolgt also sequenziell in unterschiedlichen Anlagenteilen, welche zwar aufeinanderfolgen, aber nicht zwangsläufig räumlich zusammengefasst sind. Auch kann zwischen den einzelnen Bearbeitungsschritten in den Anlagenteilen eine Verzögerung auftreten.

Die hergestellten Produkte können zu unterschiedlichen Endprodukten weiterverarbeitet werden, wobei die unterschiedlichen Endprodukte bestimmte Anforderungen an die Oberflächenqualität der hergestellten Produkte aufweisen, wobei die Oberflächenqualität üblicherweise durch die Art und Anzahl von Oberflächendefekten definiert ist. So müssen beispielsweise die hergestellten Produkte zur Verwendung als Automobilaußenhaut eine wesentlich höhere Oberflächenqualität aufweisen als beispielsweise bei einer Verwendung als Röhrengüte oder Baustahl.

Bei der Herstellung der Produkte wird wenigstens am Ende der genannten Prozesskette die Oberflächenqualität im Rahmen einer Oberflächeninspektion ermittelt. Diese Oberflächeninspektion kann automatisch oder manuell erfolgen. Die Oberflächeninspektion stellt Defekte wie Risse, insbesondere Längsrisse, oder Schalen und deren Position an der Oberfläche der hergestellten Produkte fest. Die so festgestellten Oberflächendefekte sind maßgeblich dafür, ob die hergestellten Produkte zur Weiterverarbeitung zum jeweils gewünschten Endprodukt geeignet sind oder nicht. Gegebenenfalls können die hergestellten Produkte abgewertet werden und zu Produkten mit geringeren Qualitätsanforderungen weiterverarbeitet werden. Im schlimmsten Fall handelt es sich dabei jedoch um Ausschuss.

Die Herstellung erfolgt in unterschiedlichen Anlagenteilen, insbesondere den Anlagenteilen Stahlwerk, Pfannenofen, Gießmaschine und Walzwerk. Üblicherweise erfolgt eine Prozessoptimierung lediglich innerhalb eines Anlagenteils, nicht jedoch über die gesamte Prozesskette. Dies liegt unter anderem daran, dass die einzelnen Prozessschritte meistens räumlich und/oder zeitlich getrennt voneinander stattfinden. Andererseits haben Defekte eines vorherigen Anlagenteils üblicherweise einen Einfluss auf die nachfolgenden Anlagenteile und die erzielbare Oberflächenqualität über die gesamte Prozesskette. Dabei ist auch zu beachten, dass Oberflächendefekte erst in einem späteren Anlagenteil sichtbar werden können, obwohl deren Ursprung in einem vorgelagerten Anlagenteil liegt.

Um diese Nachteile zu vermeiden, wird in dem Artikel "Optimale Oberflächenqualität bei hochwertigen Stahlgüten", veröffentlicht in der Stahl und Eisen, August 2020, Seiten 39 bis 43, vorgeschlagen, die relevanten Prozessparameter auf der Level-1 und Level-2 Prozessautomation über die gesamte Produktionskette zu erfassen und mit den erfassten Oberflächendefekten und deren Position mittels einer künstlichen Intelligenz und des maschinellen Lernens auszuwerten. Es wird also versucht, die erfassten Prozessparameter mit den erfassten Oberflächendefekten zu korrelieren, um ursächliche Prozessparameter zu identifizieren und nachfolgend zu vermeiden. Der genannte Artikel offenbart jedoch nicht, wie die künstliche Intelligenz und das maschinelle Lernen die ursächlichen Prozessparameter identifiziert, insbesondere wie aus der Vielzahl der erfassten Prozessparameter ein für den erfassten Oberflächendefekt ursächlicher Prozessparameter benannt werden kann. Ferner betrifft dieser Artikel nur die Vermeidung von Oberflächendefekten, nicht aber die Gewährleistung einer vorgegebenen Oberflächenqualität bei zukünftig herzustellenden Produkten durch Reduzierung von Oberflächendefekten auf Basis von historischen Oberflächendefekten.

Ausgehend von diesem Stand der Technik liegt der Erfindung die Aufgabe zugrunde, Produkte wie Dickbrammen, Dünnbrammen oder Langprodukten einer bestimmten Stahlsorte in einer Stranggussanlage umfassend wenigstens die Anlagenteile Stahlwerk, Pfannenofen, Gießmaschine, Walzwerk und Oberflächeninspektion mit einer vorgegebenen Oberflächenqualität herzustellen.

Die Aufgabe wird erfindungsgemäß gelöst durch ein Verfahren zur Herstellung von Produkten wie Dickbrammen, Dünnbrammen oder Langprodukten einer bestimmten Stahlsorte mit einer vorgegebenen Oberflächenqualität in einer Stranggussanlage umfassend wenigstens die Anlagenteile Stahlwerk, Pfannenofen, Gießmaschine, Walzwerk und Oberflächeninspektion, umfassend die Schritte:
- Bereitstellen von historischen relevanten Regelgrößen aus den Anlagenteilen Stahlwerk, Pfannenofen, Gießmaschine und Walzwerk während der Herstellung des gewünschten Produkts, wobei die relevanten Regelgrößen zu entsprechenden Positionen des gewünschten Produkts zugeordnet sind, und von zugehörigen historischen Oberflächendefekten und deren Position am hergestellten Produkt;
- Vorhersage von Oberflächendefekten mittels wenigstens eines Vorhersagemodells für Oberflächendefekte auf Basis der historischen relevanten Regelgrößen, der den Regelgrößen zugeordneten Positionen am hergestellten Produkt und der historischen Oberflächendefekte und deren Position am hergestellten Produkt, wobei das wenigstens eine Vorhersagemodell auf einer künstlichen Intelligenz basiert;
- Auswerten der Vorhersage des Vorhersagemodells mittels eines Auswertemodells zur Bestimmung von Fehlerursachen der vom Vorhersagemodell vorhergesagten Oberflächendefekte, wobei die Fehlerursachen jeweils wenigstens eine Regelgröße der Anlagenteile Stahlwerk, Pfannenofen, Gießmaschine und Walzwerk umfassen; und
- Bestimmen angepasster Regelgrößen mittels eines Expertensystems zur Vermeidung der vorhergesagten Oberflächendefekte, um die vorgegebene Oberflächenqualität zu erreichen, wobei das Expertensystem die Regelgrößen anpasst, die vom Auswertemodell als Fehlerursache bestimmt wurden, wobei die vom Vorhersagemodell vorhergesagten Oberflächendefekte so weit reduziert werden, dass die vorgegebene Oberflächenqualität erreicht wird.

Eine vorgegebene Oberflächenqualität im Sinne der Erfindung bezieht sich auch auf eine garantierte Oberflächenqualität des hergestellten Produkts.

Gemäß dem erfindungsgemäßen Verfahren werden die historischen relevanten Regelgrößen aus den Anlagenteilen Stahlwerk, Pfannenofen, Gießmaschine und Walzwerk bereitgestellt. Die erfassten Regelgrößen sind dabei entsprechenden Positionen des hergestellten Produkts zugeordnet. Dadurch kann jederzeit überprüft werden, welche historischen Regelgrößen zum Zeitpunkt der entsprechenden Herstellung eines Produkts in einem Anlagenteil erfasst wurden, beispielsweise Zusammensetzung der Legierung, Temperatur im Pfannenofen, Gießgeschwindigkeiten der Gießmaschine oder Parameter im Walzwerk.

Ferner werden Oberflächendefekte, wie beispielsweise Risse, insbesondere Längsrisse, oder Schalen an dem hergestellten Produkt bereitgestellt, inklusive der Positionen der Oberflächendefekte am hergestellten Produkt. Durch einen Abgleich über die Position lassen sich die zum Zeitpunkt der Herstellung des entsprechenden Produktabschnitts an dieser Position in dem jeweiligen Anlagenteil erfassten Regelgrößen ermitteln. Es ist dadurch beispielsweise bekannt, aus welchen Bestandteilen die Legierung zur Herstellung des Produktabschnitts bestand, welche Temperatur im Pfannenofen vorherrschte, mit welcher Geschwindigkeit dieser Produktabschnitt gegossen wurde oder unter welchen Bedingungen der Produktabschnitt gewalzt wurde.

Nachfolgend wird gemäß dem erfindungsgemäßen Verfahren wenigstens ein Vorhersagemodell genutzt, um Oberflächendefekte vorherzusagen. Dies erfolgt auf Basis der historischen relevanten Regelgrößen, der den Regelgrößen zugeordneten Positionen am hergestellten Produkt und der historischen Oberflächendefekte und deren Position am hergestellten Produkt. Das wenigstens eine Vorhersagemodell basiert auf einer künstlichen Intelligenz.

Die Vorhersage des Vorhersagemodells wird gemäß dem erfindungsgemäßen Verfahren durch ein Auswertemodell ausgewertet. Dabei wird eine Fehlerursache für den vom Vorhersagemodell vorhergesagten Oberflächendefekt bestimmt. Es wird also die wahrscheinlichste Ursache für den vorhergesagten Oberflächendefekt bestimmt. Diese Fehlerursache umfasst wenigstens eine Regelgröße der Anlagenteile Stahlwerk, Pfannenofen, Gießmaschine oder Walzwerk. Das Auswertemodell benennt somit die Regelgröße, welche aller Wahrscheinlichkeit nach die Hauptursache für den vorhergesagten Oberflächendefekt ist.

Anschließend wird gemäß dem erfindungsgemäßen Verfahren eine angepasste Regelgröße zur Vermeidung des vorhergesagten Oberflächendefekts bestimmt. Dies erfolgt mittels eines Expertensystems, welches die Regelgröße anpasst, die vom Auswertemodell als Fehlerursache bestimmt wurde. Das Expertensystem bestimmt somit eine sinnvolle Anpassung der vom Auswertemodell bestimmten Regelgröße. Dazu enthält das Expertensystem zweckmäßigerweise Informationen, wie sich Änderungen einer Regelgröße auf Oberflächendefekte auswirken, insbesondere wie diese vermieden werden können.

Gemäß dem erfindungsgemäßen Verfahren wird somit ein wahrscheinlicher zukünftiger Oberflächendefekt vorhergesagt. Die für diesen wahrscheinlichen Oberflächenfehler verursachende Regelgröße wird bestimmt und anschließend wird diese Regelgröße angepasst, um den vorhergesagten Oberflächendefekt zu vermeiden.

Das erfindungsgemäße Verfahren kann vom Vorhersagemodell vorhergesagte Oberflächendefekte so weit reduzieren, dass das herzustellende Produkt eine vorgegebene Oberflächenqualität erzielt. Es werden also Oberflächendefekte von herzustellenden Produkten reduziert, so dass diese Produkte die an sie gestellten Qualitätsansprüche erfüllen und für den vorgesehenen Verwendungszweck geeignet sind.

In einer bevorzugten Variante der Erfindung umfasst das Verfahren den Schritt des Übermittelns der bestimmten angepassten Regelgrößen an die Prozessautomation des entsprechenden Anlagenteils zur automatischen Umsetzung. Die angepassten Regelgrößen werden also automatisch an den entsprechenden Anlagenteil übermittelt und dort umgesetzt. Alternativ können die angepassten Regelgrößen auch erst nach einer manuellen Freigabe eines Bedieners übermittelt und/oder umgesetzt werden. Die angepassten Regelgrößen können in dieser Alternative nochmals vom Bediener kontrolliert werden, bevor diese zur Steuerung des Anlagenteils umgesetzt werden.

Nach einer erfindungsgemäßen Variante betreffen die erfassten relevanten Regelgrößen und/oder die bestimmten angepassten Regelgrößen der Level-2 der Automatisierungsebene, vorzugsweise zusätzlich der Level-1 der Automatisierungsebene. Die Regelgrößen sind beispielsweise Gießgeschwindigkeit, Gießgeschwindigkeitsabweichung, Wassermengen der Strangkühlung in der Gießmaschine oder die Pfannentemperatur am Ende der Sekundärmetallurgie, Überhitzung einer Gießpfanne, Mengen bei der Calcium- und Aluminiumbehandlung im Pfannenofen, Kupferdicken der Breitseiten der Gießkokille, Spritwasserplan zur Steuerung der Sekundärkühlung, Spülparameter am Pfannenofen, Stahlwerkseinstellungen und Vorgabezeiten, Kokillenkonizität, Kokillenkühlwasser, Strom in der elektromechanischen Bremse und dem Kokillenrührer und/oder Strangrührer, Argonflüsse im Gießrohr gegen Clogging. Gemäß einer zweckmäßigen Variante der Erfindung berücksichtigt das Zuordnen der historischen Regelgrößen zu entsprechenden Positionen des hergestellten Produkts die in den einzelnen Anlagenteilen Stahlwerk, Pfannenofen, Gießmaschine und Walzwerk potentiell auftretende Längenänderung des Zwischenprodukts oder Endprodukts. Dies betrifft beispielsweise das Gießen einer Schmelze zu einer Bramme oder einem Langprodukt und ein nachfolgendes Walzen. Dadurch wird gewährleistet, dass am Ende der Prozesskette Informationen darüber vorliegen, welche Regelgrößen bei der Herstellung eines bestimmten Produktabschnitts in allen Anlagenteilen erfasst wurden.

In einer bevorzugten Variante der Erfindung beziehen sich die erfassten oder vorhergesagten Oberflächendefekte auf das Ende der Produktionskette, vorzugsweise auf die vorgesehene Verwendung beim Endabnehmer. Unregelmäßigkeiten der Oberfläche des hergestellten Produkts werden in dieser Variante nur dann berücksichtigt, wenn diese für die vorgesehene Verwendung beim Endabnehmer relevant sind. Kleinere Oberflächenfehler bei Produkten mit geringeren Anforderungen können somit vernachlässigt werden. Bei Produkten mit hohen Anforderungen an die Oberfläche, wie bei einer Verwendung im Bereich einer automobilen Außenhaut, müssen andererseits auch kleinste Oberflächendefekte berücksichtigt werden, um nachfolgende Reklamationen oder Abwertungen zu vermeiden.

Nach einer besonders bevorzugten Variante der Erfindung erfolgt die Vorhersage von Oberflächendefekten mittels mehrerer Vorhersagemodelle, wobei jedes Vorhersagemodell auf einen bestimmten Oberflächendefekt fokussiert ist. Durch die Verwendung separater Vorhersagemodelle für unterschiedliche Oberflächendefekte lässt sich die Genauigkeit der Vorhersage verbessern, da die Modelle auf einen bestimmten Oberflächendefekt fokussiert werden können. Eine sogenannte Datenverunreinigung unter den separaten Modellen wird dadurch vermieden.

Gemäß einer bevorzugten Variante erfolgt die Vorhersage eines bestimmten Oberflächendefekts dadurch, dass eines der mehreren Vorhersagemodelle anschlägt, wobei der bestimmte Oberflächendefekt dem Oberflächendefekt entspricht, auf welchen das entsprechende Vorhersagemodell fokussiert ist. Die Vorhersage eines Oberflächendefekts erfolgt somit quasi automatisch, da das auf einen bestimmten Oberflächenfehler fokussierte Modell anschlägt, wenn die entsprechenden Variablen des Modells erfüllt sind. Es muss nur festgestellt werden, welches der separaten Modelle angeschlagen hat.

In einer vorteilhaften Variante der Erfindung beschreibt das Auswertemodell die Zusammenhänge von Oberflächendefekten mit dem zugehörigen Entstehungsmechanismus des Oberflächendefekts und den relevanten Regelgrößen. Mittels des Entstehungsmechanismus des Oberflächendefekts kann das Auswertemodell die für den Oberflächendefekt maßgebende Regelgröße bestimmen. Da das Auswertemodell den Mechanismus hinter dem Oberflächenfehler kennt, kann es auch die zugehörige Regelgröße in einem der Anlagenteile Stahlwerk, Pfannenofen, Gießmaschine und Walzwerk identifizieren.

Nach einer zweckmäßigen Variante der Erfindung benennt das Auswertemodell eine Regelgröße, welche maßgeblich für den vom Vorhersagemodell vorausgesagten Oberflächendefekt ist.

Gemäß einer weiteren vorteilhaften Variante der Erfindung beschreibt das Expertensystem sinnvolle Änderungen für bestimmte Regelgrößen, insbesondere Parameterräume für Regelgrößen und/oder Schrittgrößen für Änderungen von Regelgrößen. Das Expertensystem hat somit genaue Kenntnis über sämtliche Regelgrößen der Anlagenteile Stahlwerk, Pfannenofen, Gießmaschine und Walzwerk und auch in welchem Rahmen und in welcher Änderungsrate diese angepasst werden können bzw. sollten.

Nach einer zweckmäßigen Variante der Erfindung können die angepassten Regelgrößen für unterschiedliche Zeitpunkte bestimmt werden, beispielsweise zur sofortigen Umsetzung, zur Umsetzung für die nachfolgende Schmelze einer Pfanne, nach einer durchgeführten Wartung oder zu anderen Zeitpunkten. Das erfindungsgemäße Verfahren bestimmt somit auch einen bevorzugten Zeitpunkt der Umsetzung der angepassten Regelgrößen. Hierbei werden angepasste Regelgrößen zur direkten Ausführung, zur Ausführung für die nächstmöglich bereitzustellende Gießpfanne oder für den nächsten Guß vorgegeben. Hierbei kann eine Gießgeschwindigkeit direkt online als Regelgröße angepasst werden. Eine Überhitzungstemperatur als anzupassende Regelgröße wird erst mit einer der nächsten Gießpfannen berücksichtigt werden können. Eine größere Kupferdicke der Breitseiten der Kokille kann als Gegenmaßnahme z.B. für Längsrisse erst mit dem nächsten Guss durch Tausch der Kokille berücksichtigt werden.

Vorzugsweise wird der Betreiber der Produktionsanlage über den Zeitpunkt der Umsetzung der angepassten Regelgrößen informiert und gegebenenfalls über durchzuführende Tätigkeiten, wie beispielsweise durchzuführende Wartungsarbeiten. Ferner kann der Anlagenbetreiber zusätzlich über die in der Zwischenzeit erzielbare Produktqualität informiert werden. Auch kann der Anlagenbetreiber über mögliche Nachbearbeitungen der hergestellten Produkte zur Verbesserung der Produktqualität informiert werden, insbesondere für den Zeitraum, bis die angepassten Regelgrößen umgesetzt wurden und die gewünschte Produktqualität gewährleistet ist.

Als defekt vorhergesagte Brammen, die nicht vermieden werden können, sind vorzugsweise als solche gekennzeichnet. Ein weiterer Vorteil der Erfindung liegt in einer selektiven Adjustage der Brammen zwischen Gießanlage und Walzwerk, um eine gezielte Instandsetzung betroffener Brammen zu ermöglichen. Im Gegenzug werden nicht defekte Brammen für den Heißeinsatz freigegeben.

In einer vorteilhaften Variante der Erfindung werden die bestimmten angepassten Regelgrößen automatisch oder nach manueller Freigabe an die Prozessautomation des zugehörigen Anlagenteils zur Ausführung übermittelt. Das erfindungsgemäße Verfahren kann somit vollautomatisch oder teilautomatisch mit manueller Überwachung ausgeführt werden.

Gemäß einer erfindungsgemäßen Variante wird das Auswertemodell und/oder das Expertensystem anfänglich mit Expertenwissen konfiguriert. Es werden also die Erfahrungen des Anlagenbetreibers, insbesondere des Fachpersonals des Anlagenbetreibers, bei der Konfiguration des Auswertemodells und/oder des Expertensystems berücksichtigt.

Nach einer weiteren Variante der Erfindung sind das Auswertemodell und/oder das Expertensystem selbstlernend. Somit verbessern sich das Auswertemodell und/oder das Expertensystem über die Betriebsdauer, so dass sich mit fortschreitender Ausführung des Verfahrens die Ergebnisse verbessern.

In einer zweckmäßigen Variante der Erfindung wird das Verfahren unabhängig vom Betrieb der Anlagenteile ausgeführt und nachfolgend werden die bestimmten angepassten Regelgrößen an die Anlagenteile zur Ausführung der Produktion übermittelt. Das Verfahren wird demnach Offline ausgeführt, also bevor die Produktion der Produkte mit vorgegebener Oberflächenqualität begonnen hat.

Gemäß einer vorteilhaften Variante der Erfindung ist das Expertensystem regelbasiert. Das Expertensystem gibt also feste Regeln vor, wie bestimmte Regelgrößen der Anlagenteile Stahlwerk, Pfannenofen, Gießmaschine und Walzwerk angepasst werden sollen. Diese Regeln können mit der Zeit angepasst werden, insbesondere wenn das Expertensystem selbstlernend ausgebildet ist.

Nach einer besonders bevorzugten und vorteilhaften Variante der Erfindung bestimmt das Auswertemodell eine einzige Regelgröße als Fehlerursache des vom Vorhersagemodell vorhergesagten Oberflächendefekts und das Expertensystem passt diese einzige Regelgröße zur Vermeidung des vorhergesagten Oberflächendefekts an. Somit passt das erfindungsgemäße Verfahren in dieser vorteilhaften Variante nur eine einzige Regelgröße an, was einem minimalen Prozesseingriff entspricht. Das Auswertemodell bestimmt die für den vorhergesagten Oberflächendefekt wahrscheinlichste Regelgröße als Fehlerursache und genau diese eine Regelgröße wird nachfolgend vom Expertensystem angepasst. Es werden also nicht wie beim Stand der Technik mehrere Regelgrößen angepasst, sondern es wird nur eine einzige Regelgröße angepasst. Dadurch wird das Risiko minimiert, dass durch eine gleichzeitige Anpassung mehrere Regelgrößen neue Oberflächendefekte entstehen.

Ferner berücksichtigt das erfindungsgemäße Verfahren in allen zuvor beschriebenen Varianten vorzugsweise, dass die Produktion immer vor geht, der Herstellungsprozess also nur angepasst wird, wenn die Produktion weiterhin sichergestellt ist. Eine Anpassung des Herstellungsprozesses erfolgt nicht, wenn dadurch eine Produktionsunterbrechung oder gar ein Produktionsausfall droht.

Nachfolgend wird die Erfindung anhand von in den Figuren dargestellten Ausführungsbeispielen näher erläutert. Es zeigen:
Nachfolgend wird die Erfindung anhand von in den Figuren dargestellten Ausführungsbeispielen näher erläutert. Es zeigen:
- Fig. 1: eine schematische Ansicht einer Stranggussanlage zur Herstellung von Produkten wie Dickbrammen, Dünnbrammen oder Langprodukten;
- Fig. 2: eine schematische Ansicht eines Regelkreises eines Anlagenteils der Stranggussanlage aus Fig. 1;
- Fig. 3: ein Ablaufdiagramm eines erfindungsgemäßen Verfahrens;
- Fig. 4: einige Details bezüglich des erfindungsgemäßen Verfahrens;
- Fig. 5: eine Tabelle mit Informationen zu dem erfindungsgemäßen Verfahren, und
- Fig. 6: den beispielhaften Einsatz des erfindungsgemäßen Verfahrens.

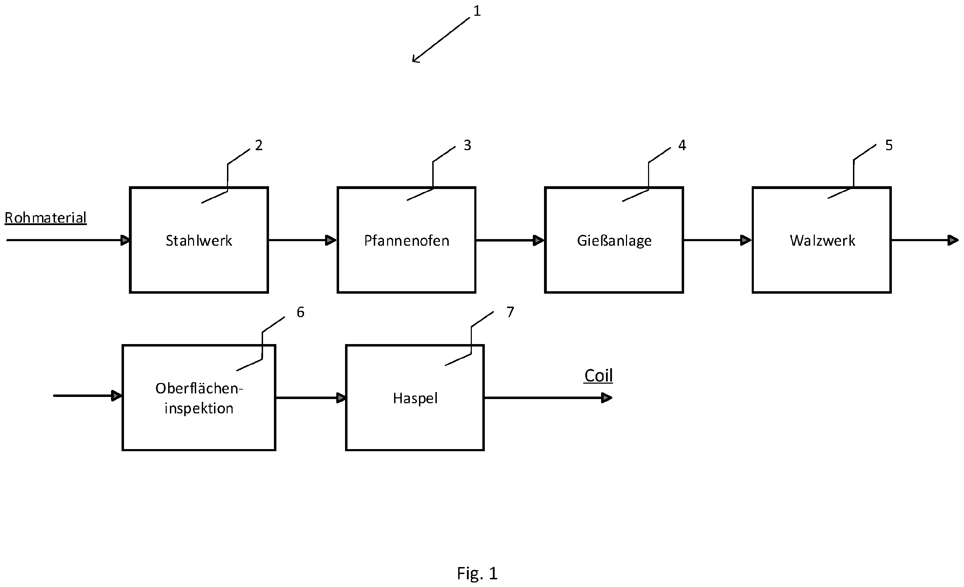

Fig. 1 zeigt eine schematische Ansicht einer Stranggussanlage 1 zur Herstellung von Produkten wie Dickbrammen, Dünnbrammen oder Langprodukten. Die Stranggussanlage 1 umfasst dabei beispielsweise die Anlagenteile Stahlwerk 2, Pfannenofen 3, Gießanlage 4, Walzwerk 5, Oberflächeninspektion 6 und Haspel 7.

In dem Stahlwerk 2 wird aus Eisenerz und Roheisen eine Eisenlegierung mit bestimmtem Kohlenstoffgehalt hergestellt. Dazu wird das Eisenerz und Roheisen zumeist in Konvertern oder Lichtbogenöfen zu Flüssigstahl geschmolzen. Das Stahlwerk 2 ist Teil der Primärmetallurgie. Der Pfannenofen 3 dient zum Aufheizen und Warmhalten des Flüssigstahls in der Sekundärmetallurgie. Sie werden auch zur Behandlung des Flüssigstahls eingesetzt, um die korrekte Gießtemperatur zu erreichen und um die genaue Analyse einstellen zu können. Der Pfannenofen 3 wird beispielsweise als ein- oder dreiphasiger Lichtbogenofen ausgeführt. In der Gießanlage 4 wird der Flüssigstahl durch eine gekühlte bodenlose Kokille gegossen, wodurch die äußere Schale erstarrt. Der gegossene Strang wird dabei nach unten, seitwärts oder oben abgezogen. Dieser Vorgang wird auch als Urformen bezeichnet. In dem Walzwerk 5 werden die beim Urformen hergestellten Barren, Brammen, Blöcke oder Knüppel zu Blechen, Bändern, Rohren, Stäben, Trägern, Schienen oder Draht weiterverarbeitet. Dazu werden die Barren, Brammen, Blöcke oder Knüppel zwischen rotierenden Walzen gewalzt. Die so hergestellten Halbzeuge (Produkte) werden in der Oberflächeninspektion 6 auf Oberflächendefekte untersucht. Dies kann automatisch mittels einer Bildauswertung oder manuell durch Inspektion erfolgen. Nachfolgend wird das so hergestellte Produkt in der Haspel 7 zu einem Coil aufgewickelt und kann so zu dem Abnehmer, wie beispielsweise einem Automobilhersteller, transportiert werden.

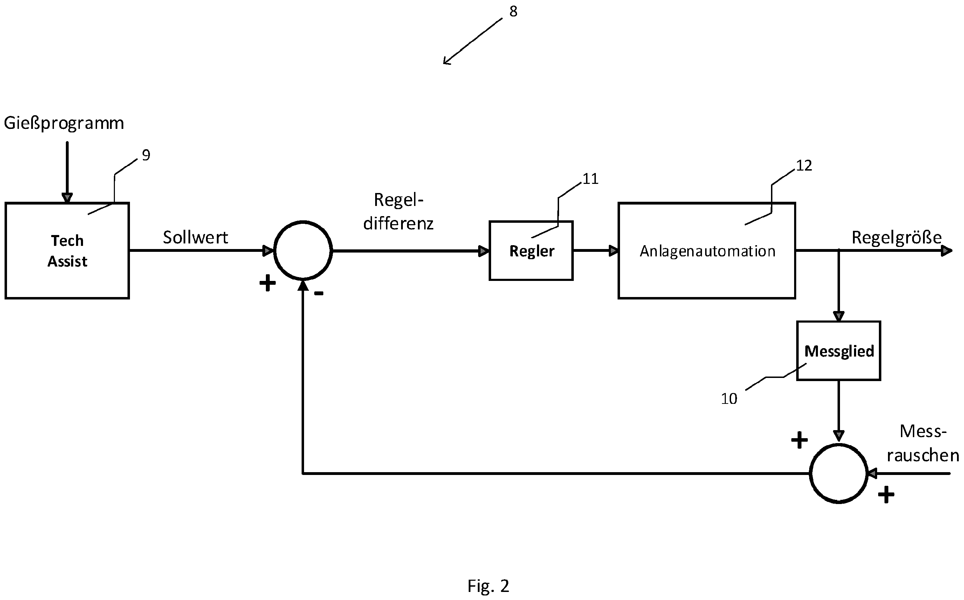

Fig. 2 zeigt eine schematische Ansicht eines Regelkreises eines Anlagenteils der Stranggussanlage 1 aus Fig. 1. Der in Fig. 2 dargestellte Regelkreis 8 gehört zu der Gießanlage 4. Basierend auf einem Gießprogramm bestimmt der sogenannte Tech-Assist 9 Sollwerte für die Anlagenautomation 12 der Gießanlage 4. Über entsprechendes Messglied 10 in der Gießanlage 4 wird der tatsächliche Wert gemessen, welcher zu dem bestimmten Sollwert korrespondiert. Dabei wird ggf. Messrauschen addiert. Die Differenz zwischen bestimmtem Sollwert und Messwert inklusive Messrauschen wird einem Regler 11 zugeführt, welcher eine angepasste Regelgröße für die Anlagenautomation 12 der Gießanlage 4 bestimmt. Die angepasste Regelgröße kann für eine nachfolgende Auswertung an eine externe Speichereinheit wie eine Datenbank übermittelt werden.

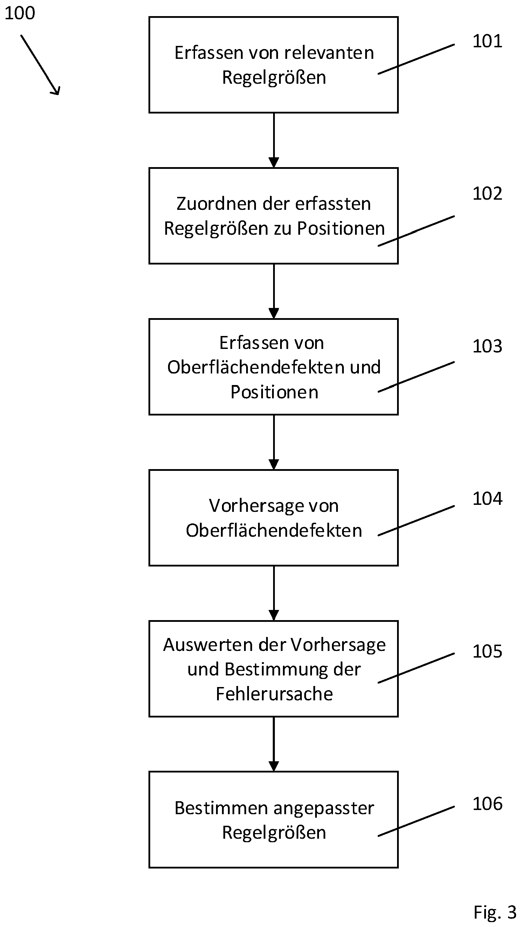

Fig. 3 zeigt ein Ablaufdiagramm eines erfindungsgemäßen Verfahrens 100 zur Herstellung von Produkten wie Dickbrammen, Dünnbrammen oder Langprodukten einer bestimmten Stahlsorte mit einer vorgegebenen Oberflächenqualität in einer Stranggussanlage 1 umfassend wenigstens die Anlagenteile Stahlwerk 2, Pfannenofen 3, Gießmaschine 4, Walzwerk 5 und Oberflächeninspektion 6, umfassend die Schritte:
- Bereitstellen 101 von historischen relevanten Regelgrößen aus den Anlagenteilen Stahlwerk 2, Pfannenofen 3, Gießmaschine 4 und Walzwerk 5 während der Herstellung des gewünschten Produkts, wobei die relevanten Regelgrößen zu entsprechenden Positionen des gewünschten Produkts zugeordnet sind, und von zugehörigen historischen Oberflächendefekten und deren Position am hergestellten Produkt;
- Vorhersage 102 von Oberflächendefekten mittels wenigstens eines Vorhersagemodells 13 für Oberflächendefekte auf Basis der historischen relevanten Regelgrößen, der den Regelgrößen zugeordneten Positionen am hergestellten Produkt und der historischen Oberflächendefekte und deren Position am hergestellten Produkt, wobei das wenigstens eine Vorhersagemodell 13 auf einer künstlichen Intelligenz basiert;
- Auswerten 103 der Vorhersage des Vorhersagemodells 13 mittels eines Auswertemodells 14 zur Bestimmung von Fehlerursachen der vom Vorhersagemodell 13 vorhergesagten Oberflächendefekte, wobei die Fehlerursachen jeweils wenigstens eine Regelgröße der Anlagenteile Stahlwerk 2, Pfannenofen 3, Gießmaschine 4 und Walzwerk 5 umfassen; und
- Bestimmen 104 angepasster Regelgrößen mittels eines Expertensystems 15 zur Vermeidung der vorhergesagten Oberflächendefekte, um die vorgegebene Oberflächenqualität zu erreichen, wobei das Expertensystem 15 die Regelgrößen anpasst, die vom Auswertemodell 14 als Fehlerursache bestimmt wurden, wobei die vom Vorhersagemodell 13 vorhergesagten Oberflächendefekte so weit reduziert werden, dass die vorgegebene Oberflächenqualität erreicht wird.

Die in Schritt 101 bereitgestellten relevanten Regelgrößen der gesamten Stranggussanlage 1 mit den Anlagenteilen Stahlwerk 2, Pfannenofen 3, Gießmaschine 4, Walzwerk 5 und der zugehörigen Oberflächendefekte zusammen mit deren jeweilige Positionen stammen vorzugsweise aus einem zentralen Datenspeicher.

Die erfassten relevanten Regelgrößen und/oder die bestimmten angepassten Regelgrößen betreffen insbesondere den Level-2 der Automatisierungsebene, vorzugsweise zusätzlich den Level-1 der Automatisierungsebene.

Die in Schritt 104 bestimmten angepassten Regelgrößen werden zweckmäßigerweise automatisch oder nach manueller Freigabe an die Prozessautomation des zugehörigen Anlagenteils zur Ausführung übermittelt.

Das Zuordnen der historischen Regelgrößen zu entsprechenden Positionen des hergestellten Produkts berücksichtigt vorteilhafterweise die in den einzelnen Anlagenteilen potentiell auftretende Längenänderung des Zwischenprodukts oder Endprodukts.

Die historischen oder vorhergesagten Oberflächendefekte beziehen sich erfindungsgemäß bevorzugt auf das Ende der Produktionskette, vorzugsweise auf die vorgesehene Verwendung beim Endabnehmer.

In einer bevorzugten Variante des erfindungsgemäßen Verfahrens 100 erfolgt die Vorhersage 102 von Oberflächendefekten mittels mehrerer Vorhersagemodelle 13, wobei jedes Vorhersagemodell 13 auf einen bestimmten Oberflächendefekt fokussiert ist. In dieser Variante erfolgt die Vorhersage 102 eines bestimmten Oberflächendefekts dadurch, dass eines der mehreren Vorhersagemodelle 13 anschlägt, wobei der bestimmte Oberflächendefekt dem Oberflächendefekt entspricht, auf welchen das entsprechende Vorhersagemodell 13 fokussiert ist.

Das Auswertemodell 14 beschreibt zweckmäßigerweise die Zusammenhänge von Oberflächendefekten mit dem zugehörigen Entstehungsmechanismus des Oberflächendefekts und den relevanten Regelgrößen. Das Auswertemodell benennt beispielsweise eine Regelgröße, welche maßgeblich für den vom Vorhersagemodell 13 vorausgesagten Oberflächendefekt ist.

Das Expertensystem 15 beschreibt vorzugsweise sinnvolle Änderungen für bestimmte Regelgrößen, insbesondere Parameterräume für Regelgrößen und/oder Schrittgrößen für Änderungen von Regelgrößen.

Vorzugsweise werden das Auswertemodell 14 und/oder das Expertensystem 15 anfänglich mit Expertenwissen konfiguriert. Insbesondere sind das Auswertemodell 14 und/oder das Expertensystem 15 selbstlernend ausgebildet. Das Expertensystem 15 ist beispielsweise regelbasiert.

Das Verfahren 100 wird bevorzugt unabhängig vom Betrieb der Anlagenteile ausgeführt wird nachfolgend werden die bestimmten angepassten Regelgrößen an die Anlagenteile zur Ausführung der Produktion übermittelt.

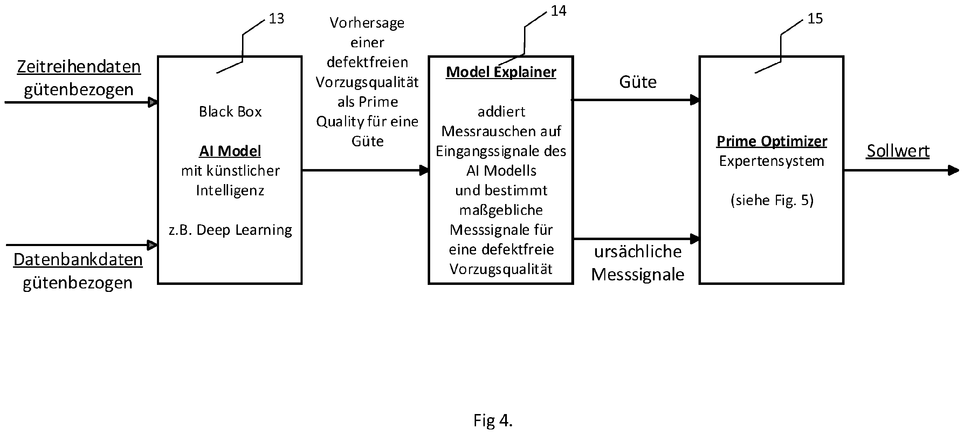

Fig. 4 zeigt einige Details bezüglich des Vorhersagemodells 13, des Auswertemodells 14 und des Expertensystems 15. Das wenigstens eine Vorhersagemodell 13 greift auf die in Schritt 101 bereitgestellten historischen relevanten Regelgrößen der Stranggussanlage 1 und der zugehörigen historischen Oberflächendefekte zu, welche beispielsweise in einer Datenbank gespeichert wurden und daher in Fig. 4 als Datenbankdaten bezeichnet sind. Ferner greift das Vorhersagemodell 13 auf die den historischen Regelgrößen und Oberflächendefekten zugeordneten Positionen am hergestellten Produkt zu, welche in Fig. 4 mit Zeitreihendaten bezeichnet sind. Das wenigstens eine Vorhersagemodell 13 wertet die vorgenannten Daten aus, um auf dieser Basis Oberflächendefekte vorherzusagen. Dabei basiert das wenigstens eine Vorhersagemodell 13 auf einer künstlichen Intelligenz.

Der vorhergesagte Oberflächendefekt, insbesondere der Defekttyp und Defektort, werden an das Auswertemodell 14 übermittelt, welches eine Fehlerursache für den vorhergesagten Oberflächendefekt bestimmt. Dazu sind in dem Auswertemodell 14 vorzugsweise die Zusammenhänge von Oberflächendefekten mit dem zugehörigen Entstehungsmechanismus des Oberflächendefekts und der relevanten Regelgrößen beschrieben. Die vom Auswertemodell 14 bestimmte Fehlerursache umfasst wenigstens eine Regelgröße der Anlagenteile Stahlwerk 2, Pfannenofen 3, Gießmaschine 4 und Walzwerk 5. Das Auswertemodell 14 leitet die bestimmte Fehlerursache und vorzugsweise den vorhergesagten Oberflächendefekt des Vorhersagemodells 13 an das Expertensystem 15, welches eine angepasste Regelgröße bestimmt, zur Vermeidung des vorhergesagten Oberflächendefekts. Dabei passt das Expertensystem 15 die Regelgröße an, die vom Auswertemodell 14 als Fehlerursache bestimmt wurde. Dazu enthält das Expertensystem 15 Informationen für sinnvolle Änderungen für bestimmte Regelgrößen, insbesondere Parameterräume für Regelgrößen und/oder Schrittgrößen für Änderungen von Regelgrößen.

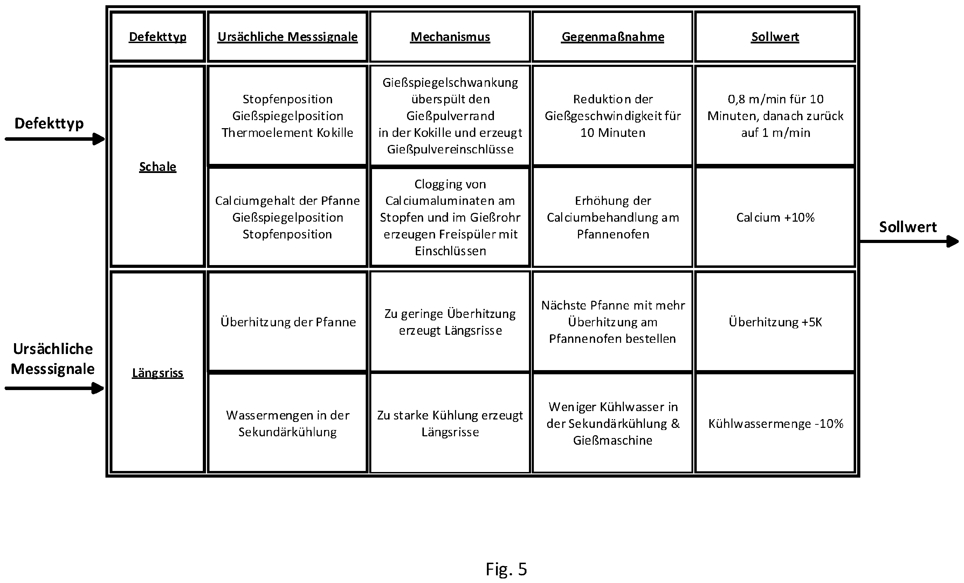

In Fig. 5 ist eine Tabelle dargestellt, in welcher für die beiden beispielhaften Oberflächenqualitäten "Automobile Außenhaut" und "Röhrengüte" mögliche Entstehungsmechanismen und die ursächlichen Regelgrößen (Messsignale), sowie entsprechende Arbeitspunkte und angepasste Regelgrößen aufgeführt sind. Bei dieser Aufstellung handelt es sich lediglich um ein Beispiel, welches der Übersicht halber vereinfacht wurde.

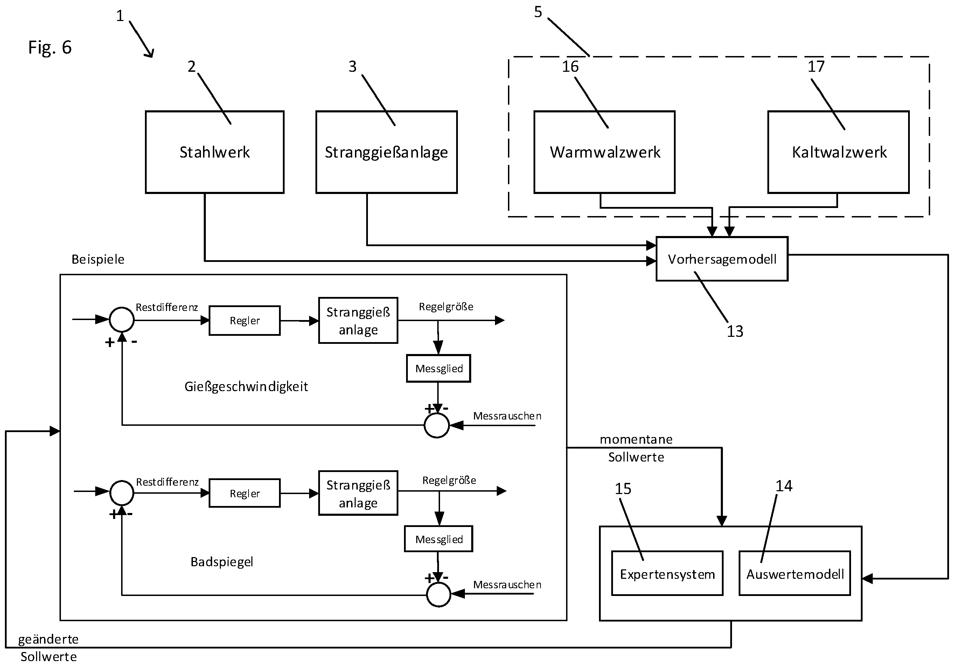

Fig. 6 zeigt den beispielhaften Einsatz des erfindungsgemäßen Verfahrens 100 zur Herstellung von Produkten wie Dickbrammen, Dünnbrammen oder Langprodukten einer bestimmten Stahlsorte mit einer vorgegebenen Oberflächenqualität in einer Stranggussanlage 1 umfassend die Anlagenteile Stahlwerk 2, Stranggießanlage mit Pfannenofen 3 und Gießmaschine 4, und Walzwerk 5 mit Warmwalzwerk 16 und Kaltwalzwerk 17. Während des Herstellungsprozesses werden in den Stranggießanlage mit Pfannenofen 3 und Gießmaschine 4, und Walzwerk 5 mit Warmwalzwerk 16 und Kaltwalzwerk 17 relevante Regelgrößen erfasst, welche entsprechenden Positionen des hergestellten Produkts zugeordnet werden. In einem dem Herstellungsprozess nachgelagerten oder in diesen integrierten Schritt werden Oberflächenfehler und deren Position am hergestellten Produkt erfasst.

Auf Basis der erfassten relevanten Regelgrößen, der den Regelgrößen zugeordneten Positionen am hergestellten Produkt und der erfassten Oberflächendefekte und deren Position am hergestellten Produkt erfolgt mittels eines Vorhersagemodells 13 eine Vorhersage von Oberflächendefekten, wobei das Vorhersagemodell 13 auf einer künstlichen Intelligenz basiert.

Die Vorhersage des Vorhersagemodells wird mittels eines Auswertemodells 14 ausgewertet, zur Bestimmung einer Fehlerursache des vom Vorhersagemodell 13 vorhergesagten Oberflächendefekts, wobei die Fehlerursache wenigstens eine Regelgröße der Anlagenteile Stahlwerk 2, Pfannenofen 3, Gießmaschine 4 und Walzwerk 5 umfasst. Mittels eines Expertensystems 15 werden angepasste Regelgrößen bestimmt, zur Vermeidung des vorhergesagten Oberflächendefekts. Das Expertensystem 15 passt die vom Auswertemodell 14 als Fehlerursache bestimmte Regelgrößen an. Die vom Vorhersagemodell (13) vorhergesagten Oberflächendefekte werden so weit reduziert, dass die vorgegebene Oberflächenqualität erreicht wird.

Die angepassten Regelgrößen werden dann als neue Sollwerte an die Anlagenautomation des entsprechenden Anlagenteils übergeben. In dem dargestellten Ausführungsbeispiel der Fig. 6 beispielsweise an die Stranggießanlage 3 betreffend die Gießgeschwindigkeit oder den Badspiegel.

### Bezugszeichenliste

- 1: Stranggussanlage
- 2: Stahlwerk
- 3: Pfannenofen
- 4: Gießanlage
- 5: Walzwerk
- 6: Oberflächeninspektion
- 7: Haspel
- 8: Regelkreis
- 9: Tech-Assist
- 10: Messglied
- 11: Regler
- 12: Anlagenautomation
- 13: Vorhersagemodell
- 14: Auswertemodell
- 15: Expertensystem
- 16: Warmwalzwerk
- 17: Kaltwalzwerk
- 100: Verfahren
- 101: Erfassen Regelgrößen
- 102: Zuordnen Position
- 103: Erfassen Oberflächendefekt und Position
- 104: Vorhersage von Oberflächendefekten
- 105: Auswerten der Vorhersage
- 106: Bestimmen angepasster Regelgrößen

## Patentansprüche

1. Verfahren (100) zur Herstellung von Produkten wie Dickbrammen, Dünnbrammen oder Langprodukten einer bestimmten Stahlsorte mit einer vorgegebenen Oberflächenqualität in einer Stranggussanlage (1) umfassend wenigstens die Anlagenteile Stahlwerk (2), Pfannenofen (3), Gießmaschine (4), Walzwerk (5) und Oberflächeninspektion (6), umfassend die Schritte:
- Bereitstellen (101) von historischen relevanten Regelgrößen aus den Anlagenteilen Stahlwerk (2), Pfannenofen (3), Gießmaschine (4) und Walzwerk (5) während der Herstellung des gewünschten Produkts, wobei die relevanten Regelgrößen zu entsprechenden Positionen des gewünschten Produkts zugeordnet sind, und von zugehörigen historischen Oberflächendefekten und deren Position am hergestellten Produkt;
- Vorhersage (102) von Oberflächendefekten mittels wenigstens eines Vorhersagemodells (13) für Oberflächendefekte auf Basis der historischen relevanten Regelgrößen, der den Regelgrößen zugeordneten Positionen am hergestellten Produkt und der historischen Oberflächendefekte und deren Position am hergestellten Produkt, wobei das wenigstens eine Vorhersagemodell (13) auf einer künstlichen Intelligenz basiert;
- Auswerten (103) der Vorhersage des Vorhersagemodells (13) mittels eines Auswertemodells (14) zur Bestimmung von Fehlerursachen der vom Vorhersagemodell (13) vorhergesagten Oberflächendefekte, wobei die Fehlerursachen jeweils wenigstens eine Regelgröße der Anlagenteile Stahlwerk (2), Pfannenofen (3), Gießmaschine (4) und Walzwerk (5) umfassen; und
- Bestimmen (104) angepasster Regelgrößen mittels eines Expertensystems (15) zur Vermeidung der vorhergesagten Oberflächendefekte, um die vorgegebene Oberflächenqualität zu erreichen, wobei das Expertensystem (15) die Regelgrößen anpasst, die vom Auswertemodell (14) als Fehlerursache bestimmt wurden, wobei die vom Vorhersagemodell (13) vorhergesagten Oberflächendefekte so weit reduziert werden, dass die vorgegebene Oberflächenqualität erreicht wird.

2. Verfahren (100) nach Anspruch 1, wobei die bestimmten angepassten Regelgrößen automatisch oder nach manueller Freigabe an die Prozessautomation des zugehörigen Anlagenteils zur Ausführung übermittelt werden.

3. Verfahren (100) nach Anspruch 1 oder Anspruch 2, wobei die erfassten relevanten Regelgrößen und/oder die bestimmten angepassten Regelgrößen den Level-2 der Automatisierungsebene betreffen, vorzugsweise zusätzlich den Level-1 der Automatisierungsebene.

4. Verfahren (100) nach einem der Ansprüche 1 bis 3, wobei das Zuordnen der historischen Regelgrößen zu entsprechenden Positionen des hergestellten Produkts die in den einzelnen Anlagenteilen potentiell auftretende Längenänderung des Zwischenprodukts oder Endprodukts berücksichtigt.

5. Verfahren (100) nach einem der Ansprüche 1 bis 4, wobei sich die vorhergesagten Oberflächendefekte auf das Ende der Produktionskette, vorzugsweise auf die vorgesehene Verwendung beim Endabnehmer, beziehen.

6. Verfahren (100) nach einem der Ansprüche 1 bis 5, wobei die Vorhersage (102) von Oberflächendefekten mittels mehrerer Vorhersagemodelle (13) erfolgt, wobei jedes Vorhersagemodell (13) auf eine bestimmte Stahlsorte fokussiert ist.

7. Verfahren (100) nach Anspruch 6, wobei die Vorhersage (102) eines bestimmten Oberflächendefekts dadurch erfolgt, dass eines der mehreren Vorhersagemodelle (13) anschlägt, wobei der bestimmte Oberflächendefekt dem Oberflächendefekt entspricht, auf welchen das entsprechende Vorhersagemodell (13) fokussiert ist.

8. Verfahren (100) nach einem der Ansprüche 1 bis 7, wobei das Auswertemodell (14) die Zusammenhänge von Oberflächendefekten mit dem zugehörigen Entstehungsmechanismus des Oberflächendefekts und den relevanten Regelgrößen beschreibt.

9. Verfahren (100) nach Anspruch 8, wobei das Auswertemodell (14) eine Regelgröße benennt, welche maßgeblich für den vom Vorhersagemodell (13) vorausgesagten Oberflächendefekt ist.

10. Verfahren (100) nach einem der Ansprüche 1 bis 9, wobei das Expertensystem (15) sinnvolle Änderungen für bestimmte Regelgrößen beschreibt, insbesondere Parameterräume für Regelgrößen und/oder Schrittgrößen für Änderungen von Regelgrößen.

11. Verfahren (100) nach einem der Ansprüche 1 bis 10, wobei das Auswertemodell (14) und/oder das Expertensystem (14) anfänglich mit Expertenwissen konfiguriert wird.

12. Verfahren (100) nach einem der Ansprüche 1 bis 11, wobei das Auswertemodell (14) und/oder das Expertensystem (15) selbstlernend sind.

13. Verfahren (100) nach einem der Ansprüche 1 bis 12, wobei das Verfahren (100) unabhängig vom Betrieb der Anlagenteile ausgeführt wird und nachfolgend die bestimmten angepassten Regelgrößen an die Anlagenteile zur Ausführung der Produktion übermittelt werden.

14. Verfahren (100) nach einem der Ansprüche 1 bis 13, wobei das Expertensystem (15) regelbasiert ist.

15. Verfahren (100) nach einem der Ansprüche 1 bis 14, wobei das Auswertemodell (14) eine einzige Regelgröße als Fehlerursache des vom Vorhersagemodell (13) vorhergesagten Oberflächendefekts bestimmt und das Expertensystem (15) diese einzige Regelgröße anpasst, um die vorgegebene Oberflächenqualität zu erreichen.
